# EUROPÄISCHE PATENTSCHRIFT

(11) **EP 2 668 138 B1**
(45) Veröffentlichungstag und Bekanntmachung des Hinweises auf die Patenterteilung: **22.04.2015**
(21) Anmeldenummer: 12701481.9
(22) Anmeldetag: 19.01.2012
(51) Int. Cl.: B63J 4/00, C02F 1/00, C02F 1/72, C02F 103/00, C02F 1/70

(54) **VORRICHTUNG UND VERFAHREN ZUR VERRINGERUNG DES GEHALTS AN WASSERSTOFFPEROXID UND PERESSIGSÄURE IN EINEM WASSERSTROM**
DEVICE AND METHOD FOR REDUCING THE HYDROGEN PEROXIDE AND PERACETIC ACID CONTENT IN A WATER FLOW
DISPOSITIF ET PROCÉDÉ POUR RÉDUIRE LA TENEUR EN PEROXYDE D'HYDROGÈNE ET EN ACIDE PERACÉTIQUE DANS UN COURANT D'EAU

(30) Priorität: 26.01.2011 DE 102011003187
(43) Veröffentlichungstag der Anmeldung: 04.12.2013
(73) Patentinhaber: Evonik Degussa GmbH, 45128 Essen (DE); KATAYAMA CHEMICAL, INC., Osaka-shi, Osaka 533-0023 (JP)
(72) Erfinder: ADAMI, Walter, 26135 Oldenburg (DE); ANGERT, Hubert, 63225 Langen (DE); KÖNIG, Bernhard, 63594 Hasselroth (DE); KRÜCK, Steffen, 63517 Rodenbach (DE); KUHN, Frank Dieter, 63571 Gelnhausen (DE); LIETZENMAYER, Martin, 63755 Alzenau (DE); WALZER, Egon, 63477 Maintal (DE); SCHMIDT, Corinna, 36396 Steinau-Bellings (DE); MURAOKA, Nobuhiro, Osaka 533-0023 (JP)
(74) Vertreter: Thiele, Georg Friedrich
(86) Internationale Anmeldenummer: PCT/EP2012/050743
(87) Internationale Veröffentlichungsnummer: WO 2012/101026

(56) Entgegenhaltungen:
- WO-A1-2005/113452
- US-A1- 2006 006 122
- International Maritime Organization: "Harmful Aquatic Organisms in Ballast Water", , 18. November 2010 (2010-11-18), XP002672017, Gefunden im Internet: URL:http://www.amtcc.com/imosite/meetings/ IMOMeeting2011/MEPC62/MEPC%2062-2.pdf [gefunden am 2012-03-21]

## Beschreibung

Die Erfindung betrifft eine Vorrichtung und ein Verfahren zur Verringerung des Gehalts an Wasserstoffperoxid und Peressigsäure in einem Wasserstrom, insbesondere in einem Wasserstrom, der Ballastwassertanks eines Schiffes entnommen wird.

Peressigsäure ist ein Biozid, das im Vergleich zu anderen Bioziden eine Reihe von Vorteilen aufweist. Peressigsäure zeigt bereits in geringen Konzentrationen von weniger als 5 ppm eine breite biozide Wirkung gegen Bakterien, Phytoplankton und Zooplankton, ohne dass es zu Resistenzen kommt. Im Gegensatz zu den meisten anderen Bioziden wird Peressigsäure in verdünnten wässrigen Lösungen rasch durch Hydrolyse und Zersetzung zu nicht mehr biozid wirkenden Stoffen abgebaut. Im Gegensatz zu Ozon oder Chlordioxid kann Peressigsäure in Form von Gleichgewichtsperessigsäure sicher transportiert und gelagert werden. Eine Behandlung von Wasserströmen mit Peressigsäure führt im Gegensatz zu Chlor oder Hypochlorit nicht oder nur in geringem Maß zur Bildung von halogenierten organischen Verbindungen und damit nicht zu einer Erhöhung des AOX-Gehalts. Peressigsäure eignet sich deshalb zur bioziden Behandlung von Wasserströmen, die nach der Behandlung in großer Menge in die Umgebung abgegeben werden, wie beispielsweise Kühlwasserströme oder Klärwerksabläufe und insbesondere Ballastwasser von Schiffen. Die Behandlung von Ballastwasser mit Peressigsäure im SEDNA®-Verfahren ist von der internationalen Seefahrtorganisation IMO für die Entfernung von Phytoplankton und Zooplankton zugelassen worden.

Obwohl sich Peressigsäure und das in Gleichgewichtsperessigsäure herstellbedingt enthaltene Wasserstoffperoxid im behandelten Wasser rasch abbauen, kann es bei einigen Anwendungen, insbesondere bei der Behandlung von Ballastwasser, erforderlich werden, nach der Behandlung noch vorliegende Restmengen von Peressigsäure und Wasserstoffperoxid zu entfernen, bevor das behandelte Wasser an die Umgebung abgegeben wird.

Für die Entfernung von Chloraminen oder Bromaminen aus behandeltem Ballastwasser wurde in WO 02/072478 vorgeschlagen, dem behandelten Ballastwasser ein Reduktionsmittel, wie Natriumthiosulfat oder Natriumsulfit, in einem molaren Überschuss zuzusetzen. Bei diesem Verfahren muss allerdings nach der Reduktion des Chloramins oder Bromamins in das behandelte Wasser nochmals Sauerstoff eingebracht werden, bevor es an die Umgebung abgegeben werden kann.

In WO 2004/054932 wird für die Entfernung von elektrolytisch erzeugtem Chlor aus behandeltem Ballastwasser vorgeschlagen, dem Ballastwasser eine Lösung von Natriumthiosulfat zuzudosieren und diese Dosierung über das Redoxpotential des chlorhaltigen Ballastwassers zu regeln.

In WO 2006/058261 und WO 2008/153808 wird für die Entfernung von elektrolytisch erzeugtem Hypochlorit aus behandeltem Ballastwasser vorgeschlagen, dem Ballastwasser eine Lösung von Natriumsulfit zuzudosieren und diese Dosierung über einen Sulfitanalysator, der durch Säurezugabe SO₂ freisetzt und dieses mit einem Sensor bestimmt, so zu regeln, dass das behandelte Ballastwasser überschüssiges Natriumsulfit enthält.

In US 2010/072144 wird für die Entfernung von Hypochlorit aus behandeltem Ballastwasser vorgeschlagen, dem Ballastwasser eine Lösung von Natriumsulfit zuzudosieren und diese Dosierung über die Messung des Redoxpotentials im Ballastwasser nach Zugabe der Natriumsulfitlösung so zu regeln, dass das Redoxpotential im Bereich von 200 bis 500 mV liegt.

In US 7,776,224 wird für die Entfernung von Wasserstoffperoxid aus behandeltem Ballastwasser vorgeschlagen, die Konzentration von Wasserstoffperoxid im Ballastwasser zu messen und auf Basis des Messwerts ein Reduktionsmittel zuzugeben. Außerdem wird vorgeschlagen, durch ein Wasserstoffperoxiddensitometer oder eine Messung des Redoxpotentials nach der Zugabe des Reduktionsmittels zu prüfen, ob nicht umgesetztes Wasserstoffperoxid vorliegt.

In EP 1 671 932 wird für eine Behandlung von Ballastwasser mit Wasserstoffperoxid oder Gleichgewichtsperessigsäure vorgeschlagen, zusammen mit dem Oxidationsmittel noch einen der Stoffe Eisen(II)sulfat, Iodid oder Katalase zuzusetzen, um eine Zersetzung von Wasserstoffperoxid während der Ballastwasserbehandlung zu bewirken.

Es besteht jedoch weiterhin Bedarf nach einer Vorrichtung und einem Verfahren, mit denen sich in einem Wasserstrom der Gehalt an Wasserstoffperoxid und Peressigsäure bei Bedarf verringern lässt und bei denen der Wasserstrom nach Entfernung von Wasserstoffperoxid und Peressigsäure keine wassergefährdenden Stoffe enthält.

Die Erfinder der vorliegenden Erfindung haben festgestellt, dass sich das aus US 2010/072144 zur Entfernung von Hypochlorit bekannten Verfahren nicht für eine Entfernung von Wasserstoffperoxid aus einem Wasserstrom eignet, da sich durch die Messung des Redoxpotentials im Wasser nach Zugabe eines Reduktionsmittels nicht zuverlässig feststellen lässt, dass das Wasser weder unumgesetztes Wasserstoffperoxid noch überschüssiges Reduktionsmittel enthält. Auch das aus WO 2004/054932 zur Entfernung von Chlor bekannte Verfahren eignet sich nicht zur Entfernung von Peressigsäure und Wasserstoffperoxid aus einem Wasserstrom, da sich aus dem Redoxpotential eines Peressigsäure und Wasserstoffperoxid enthaltenden Wasserstroms die Menge an Reduktionsmittel, die zur Entfernung von Peressigsäure und Wasserstoffperoxid erforderlich wäre, nicht vorausberechnen lässt.

Die Erfinder der vorliegenden Erfindung haben deshalb eine Vorrichtung und ein Verfahren entwickelt, mit denen sich die Gehalte an Wasserstoffperoxid und Peressigsäure in einem Wasserstrom zuverlässig verringern lassen.

Gegenstand der Erfindung ist eine Vorrichtung zur Verringerung des Gehalts an Wasserstoffperoxid und Peressigsäure in einem Wasserstrom (1), umfassend eine erste Messvorrichtung (2) zur Bestimmung der Flussrate des Wasserstroms, eine zweite Messvorrichtung (3) zur Bestimmung der Konzentration an Wasserstoffperoxid in dem Wasserstrom, eine dritte Messvorrichtung (4) zur Bestimmung der Konzentration an Peressigsäure in dem Wasserstrom, eine Dosiervorrichtung (5) zur Dosierung eines Reduktionsmittels in den Wasserstrom stromabwärts von der zweiten und dritten Messvorrichtung und eine Steuereinrichtung (6), die aus der Flussrate des Wasserstroms, der Konzentration an Wasserstoffperoxid in dem Wasserstrom und der Konzentration an Peressigsäure in dem Wasserstrom eine Menge an Reduktionsmittel zur Verringerung des Gehalts an Wasserstoffperoxid und Peressigsäure auf einen gewünschten Wert berechnet und die Dosiervorrichtung zur Dosierung des Reduktionsmittels ansteuert.

Gegenstand der Erfindung ist außerdem ein Verfahren zur Verringerung des Gehalts an Wasserstoffperoxid und Peressigsäure in einem Wasserstrom, umfassend eine Dosierung eines flüssigen Reduktionsmittels in den Wasserstrom mit einer erfindungsgemäßen Vorrichtung. Der Wasserstrom wird vorzugsweise Ballastwassertanks (10) eines Schiffes entnommen.

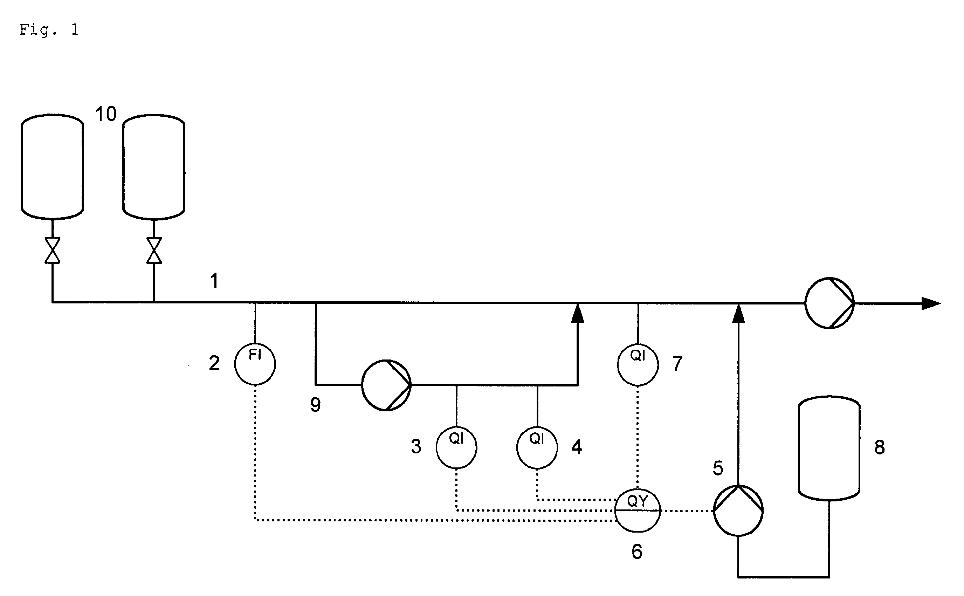

Fig. 1 zeigt eine erfindungsgemäße Vorrichtung in einer Ausführungsform mit zusätzlicher Messvorrichtung (7) zur Bestimmung der Salinität und Anordnung der zweiten und dritten Messvorrichtung in einem Seitenstrom (9).

Die erfindungsgemäße Vorrichtung umfasst eine erste Messvorrichtung (2) zur Bestimmung der Flussrate des Wasserstroms (1). Dazu eignen sich sowohl Messvorrichtungen, die einen Massenstrom ermitteln, als auch Messvorrichtungen, die einen Volumenstrom ermitteln. Für die erfindungsgemäße Vorrichtung lassen sich alle aus dem Stand der Technik bekannten Messvorrichtung zur Bestimmung der Flussrate eines Wasserstroms einsetzen, wie zum Beispiel Massendurchflussmesser, Differenzdruckmessungen an Blenden und induktive Durchflussmesser. Vorzugsweise wird zur Bestimmung der Flussrate des Wasserstroms ein Massendurchflussmesser verwendet, um die Flussrate des Wasserstroms auch für Wasserströme mit unterschiedlichen Salzgehalten zuverlässig zu bestimmen.

Die erfindungsgemäße Vorrichtung umfasst außerdem eine zweite Messvorrichtung (3) zur Bestimmung der Konzentration an Wasserstoffperoxid in dem Wasserstrom (1). Geeignet sind alle aus dem Stand der Technik bekannten Messvorrichtungen, mit denen sich die Konzentration an Wasserstoffperoxid in Wasser bestimmen lässt und die keine oder nur eine geringe Querempfindlichkeit für Peressigsäure zeigen. Geeignet sind beispielsweise Messvorrichtungen, die die Konzentration an Wasserstoffperoxid kolorimetrisch bestimmen und eine für Wasserstoffperoxid spezifische Farbreaktion verwenden, wie zum Beispiel die Reaktion von Wasserstoffperoxid mit Titanylsulfat unter Bildung eines löslichen Titan(IV)peroxokomplexes. Vorzugsweise wird zur Bestimmung der Konzentration an Wasserstoffperoxid ein amperometrischer Sensor verwendet, besonders bevorzugt ein amperometrischer Sensor, an dem eine Oxidation von Wasserstoffperoxid gemäß der Reaktionsgleichung

H₂O₂ → O₂ + 2 H⁺ + 2 e⁻

erfolgt. Geeignete amperometrische Sensoren für Wasserstoffperoxid, die keine Querempfindlichkeit für Peressigsäure zeigen, sind im Handel erhältlich, beispielsweise von der Firma ProMinent® unter der Bezeichnung DULCOTEST® PEROX. Die Ansprechzeit dieser Sensoren kann vom Hersteller durch den Austausch der Membran, die den Sensor bedeckt, an die Geschwindigkeit der Änderung der Wasserstoffperoxidkonzentration in dem zu behandelnden Wasserstrom angepasst werden.

Die erfindungsgemäße Vorrichtung umfasst weiterhin eine dritte Messvorrichtung (4) zur Bestimmung der Konzentration an Peressigsäure in dem Wasserstrom (1). Geeignet sind alle aus dem Stand der Technik bekannten Messvorrichtungen, mit denen sich die Konzentration an Peressigsäure in Wasser bestimmen lässt und die keine oder nur eine geringe Querempfindlichkeit für Wasserstoffperoxid zeigen. Geeignet sind beispielsweise Messvorrichtungen, die die Konzentration an Peressigsäure kolorimetrisch bestimmen und eine für Peressigsäure spezifische Farbreaktion verwenden, wie zum Beispiel die Reaktion von Peressigsäure mit 2,2-Azino-bis(3-ethylbenzothiazolin-6-sulfonsäure) Diammoniumsalz (ABTS) unter Bildung eines löslichen Farbstoffs. Vorzugsweise wird zur Bestimmung der Konzentration an Peressigsäure ein amperometrischer Sensor verwendet, besonders bevorzugt ein amperometrischer Sensor, an dem eine Reduktion von Peressigsäure gemäß der Reaktionsgleichung

CH₃COOOH + 2 H⁺ + 2 e⁻ → CH₃COOH + H₂O

erfolgt. Geeignete amperometrische Sensoren für Peressigsäure, die eine ausreichend geringe Querempfindlichkeit für Wasserstoffperoxid zeigen, sind im Handel erhältlich, beispielsweise von der Firma ProMinent® unter der Bezeichnung DULCOTEST® PAA. Die Ansprechzeit dieser Sensoren kann vom Hersteller durch den Austausch der Membran, die den Sensor bedeckt, an die Geschwindigkeit der Änderung der Peressigsäurekonzentration in dem zu behandelnden Wasserstrom angepasst werden. Ebenfalls geeignet sind im Handel angebotene amperometrische Sensoren zur Bestimmung des Gesamtchlorgehalts, beispielsweise die von der Firma ProMinent® unter der Bezeichnung DULCOTEST® CTE-1 angebotenen Sensoren. Da ein Wasserstoffperoxid enthaltender Wasserstrom wegen der raschen Reaktion von Chlor und Hypochlorit mit Wasserstoffperoxid nur geringe Mengen an Chlor und Hypochlorit enthalten kann und die amperometrischen Sensoren zur Bestimmung des Gesamtchlorgehalts auch Peressigsäure bei geringer Querempfindlichkeit für Wasserstoffperoxid erfassen, kann auch mit solchen Sensoren der Gehalt an Peressigsäure in dem Wasserstrom verlässlich bestimmt werden.

Die Verwendung von amperometrischen Sensoren zur Bestimmung der Konzentrationen an Wasserstoffperoxid und Peressigsäure ermöglicht einen weitgehend automatisierten Betrieb der erfindungsgemäßen Vorrichtung durch Personal, wie zum Beispiel eine Schiffsbesatzung, das keine Ausbildung im Betrieb von Analysengeräten hat.

An Stelle von zwei getrennten Messvorrichtungen zur Bestimmung der Konzentrationen an Wasserstoffperoxid und Peressigsäure kann in der erfindungsgemäßen Vorrichtung auch eine Messvorrichtung eingesetzt werden, die sowohl die Konzentration an Wasserstoffperoxid als auch die Konzentration an Peressigsäure bestimmt. Ein Beispiel für eine solche Messvorrichtung ist eine automatisierte Titration mit sequentieller cerimetrischer Bestimmung der Wasserstoffperoxidkonzentration und iodometrischer Bestimmung der Peressigsäurekonzentration.

Die Messvorrichtungen zur Bestimmung der Konzentrationen an Wasserstoffperoxid und Peressigsäure werden vorzugsweise in einem Seitenstrom (9) des Wasserstroms angeordnet, um Beschädigungen der Messvorrichtungen durch im Wasserstrom mitgeführte Feststoffe zu vermeiden. Zum gleichen Zweck wird im Seitenstrom vorzugsweise ein Filter stromaufwärts vor den Messvorrichtungen angeordnet.

Die erfindungsgemäße Vorrichtung umfasst außerdem eine Dosiervorrichtung (5) zur Dosierung eines Reduktionsmittels in den Wasserstrom (1) stromabwärts von der zweiten und dritten Messvorrichtung. Geeignet sind Dosiervorrichtungen zur kontinuierlichen oder intermittierenden Dosierung eines Reduktionsmittels, das vorzugsweise gasförmig oder flüssig und besonders bevorzugt flüssig ist. Vorzugsweise umfasst die Dosiervorrichtung einen Vorratsbehälter (8) und eine regelbare Dosierpumpe (5) für flüssiges Reduktionsmittel, so dass eine kontinuierliche Dosierung des flüssigen Reduktionsmittels mit einem variablen Volumenstrom möglich ist. Besonders bevorzugt umfasst die Dosiervorrichtung eine zwangsfördernde Dosierpumpe, wie beispielsweise eine Membranpumpe, Zahnradpumpe oder Kolbenpumpe, die für die Dosierung von flüssigem Reduktionsmittel die Einstellung eines berechneten Volumenstroms ermöglicht.

Die erfindungsgemäße Vorrichtung umfasst weiterhin eine Steuereinrichtung (6), die aus der Flussrate des Wasserstroms (1), der Konzentration an Wasserstoffperoxid in dem Wasserstrom und der Konzentration an Peressigsäure in dem Wasserstrom eine Menge an Reduktionsmittel zur Verringerung des Gehalts an Wasserstoffperoxid und Peressigsäure auf einen gewünschten Wert berechnet und die Dosiervorrichtung (5) zur Dosierung des Reduktionsmittels ansteuert. Die Steuereinrichtung kann als fest verdrahtete Steuerung oder als Berechnungs- und Steuerprogramm auf einem Prozessleitrechner ausgeführt sein. Die Berechnung der Menge an Reduktionsmittel aus der Flussrate des Wasserstroms, der Konzentration an Wasserstoffperoxid in dem Wasserstrom und der Konzentration an Peressigsäure in dem Wasserstrom kann mit empirischen, durch Versuche ermittelten Umrechnungsfaktoren oder vorzugsweise mit aus der Stöchiometrie der Reduktionsreaktion berechneten Umrechnungsfaktoren erfolgen. Für salzfreie Wasserströme und eine Reduktion mit einer wässrigen Lösung von Natriumsulfit können die Umrechnungsfaktoren auf Basis der Reaktionsgleichungen (I) und (II) berechnet werden.

(I) H₂O₂ + Na₂SO₃ → H₂O + Na₂SO₄

(II) CH₃COOOH + Na₂SO₃ → CH₃COOH + Na₂SO₄

Für flüssige Reduktionsmittel, die über eine zwangsfördernde Dosierpumpe dosiert werden, kann aus der berechneten Menge an Reduktionsmittel direkt der an der Dosierpumpe einzustellende Volumenstrom berechnet und die Dosierpumpe dementsprechend angesteuert werden.

In einer bevorzugten Ausführungsform umfasst die erfindungsgemäße Vorrichtung eine zusätzliche Messvorrichtung (7) zur Bestimmung der Salinität in dem Wasserstrom (1). Der Begriff Salinität bezeichnet dabei die dimensionslose Salinität S auf der Practical Salinity Scale 1978. Die Bestimmung der Salinität kann auf Basis von Dichtemessungen und vorzugsweise auf Basis der elektrischen Leitfähigkeit mit einem Leitfähigkeitssensor erfolgen. Bei dieser Ausführungsform wird von der Steuereinrichtung die Menge an Reduktionsmittel mit der Salinität berechnet. Vorzugsweise wird dabei die für einen salzfreien Wasserstrom berechnete Menge an Reduktionsmittel mit einem durch Versuche ermittelten Korrekturfaktor für die Salinität korrigiert. Für salzhaltige Wasserströme und eine Reduktion mit einer wässrigen Lösung von Natriumsulfit wird vorzugsweise die für einen salzfreien Wasserstrom berechnete Menge an Reduktionsmittel um einen zur Salinität proportionalen Anteil vergrößert. Die Berücksichtigung der Salinität bei der Dosierung des Reduktionsmittels ermöglicht eine zuverlässige Verringerung des Gehalts an Wasserstoffperoxid und Peressigsäure bis unter vorgegebene Grenzwerte auch bei veränderlichem Salzgehalt des Wasserstroms, ohne dass es zu einer Überdosierung von Reduktionsmittel kommt.

Bei dem erfindungsgemäßen Verfahren zur Verringerung des Gehalts an Wasserstoffperoxid und Peressigsäure in einem Wasserstrom wird ein flüssiges Reduktionsmittel mit einer erfindungsgemäßen Vorrichtung in den Wasserstrom (1) dosiert. Der Wasserstrom ist vorzugsweise ein durch Zusatz von Gleichgewichtsperessigsäure als Biozid behandelter Wasserstrom, insbesondere ein Kühlwasserstrom oder ein Klärwerksablauf und am meisten bevorzugt ein Wasserstrom, der Ballastwassertanks (10) eines Schiffes entnommen wird.

Im erfindungsgemäßen Verfahren wird vorzugsweise eine wässrige Lösung von Natriumsulfit als flüssiges Reduktionsmittel eingesetzt.

Das erfindungsgemäße Verfahren ermöglicht eine zuverlässige Verringerung des Gehalts an Wasserstoffperoxid und Peressigsäure in einem Wasserstrom unter vorgegebene Grenzwerte, wobei durch Verwendung von Natriumsulfit als Reduktionsmittel der Wasserstrom nach der Behandlung nicht mehr die Wasserqualität beeinträchtigende Eigenschaften hat. Dies ermöglicht das Ablassen eines mit Gleichgewichtsperessigsäure zur Abtötung von Phytoplankton und Zooplankton behandelten Ballastwassers in Gewässer, wie zum Beispiel enge Hafenbecken, in denen das Ballastwasser nur schlecht verdünnt wird, ohne die Wasserqualität des Gewässers zu beeinträchtigen.

### Beispiele:

Für die Ausführungsbeispiele wurde Wasser, das einem Trinkwasserleitungsnetz entnommen wurde, mit 80 ppm Gleichgewichtsperessigsäure behandelt, die 14,4 Gew.-% Peressigsäure und 13,5 Gew.-% Wasserstoffperoxid enthielt. Das Wasser enthielt nach der Behandlung mit Gleichgewichtsperessigsäure gewichtsbezogen 11,9 ppm Peressigsäure und 13,3 ppm Wasserstoffperoxid.

Zu einem Strom des mit Gleichgewichtsperessigsäure behandelten Wassers wurde in einer erfindungsgemäßen Vorrichtung gemäß Figur 1 kontinuierlich eine wässrige Lösung von Natriumsulfit dosiert. Die Konzentrationen an Wasserstoffperoxid und Peressigsäure wurden dabei mit amperometrischen Sensoren der Firma ProMinent® bestimmt. In Beispiel 1 wurde das 1,03-fache der gemäß Reaktionsgleichungen (I) und (II) aus den Konzentrationen an Wasserstoffperoxid und Peressigsäure und der Durchflussmenge an Wasser berechneten stöchiometrischen Menge an Natriumsulfit dosiert. In Beispiel 2 wurde das 1,21-fache der berechneten stöchiometrischen Menge an Natriumsulfit dosiert.

In Beispiel 1 enthielt das Wasser nach der Dosierung von Natriumsulfit gewichtsbezogen 0,1 ppm Peressigsäure und 1,0 ppm Wasserstoffperoxid. In Beispiel 2 enthielt das Wasser nach der Dosierung von Natriumsulfit gewichtsbezogen 0,2 ppm Peressigsäure und 0,1 ppm Wasserstoffperoxid.

Für das mit Gleichgewichtsperessigsäure behandelte Wasser und die in den Beispielen 1 und 2 erhaltenen Wasserströme wurden gemäß den Richtlinien 201 und 202 der OECD zur Testung von Chemikalien die Inhibierung des Algenwachstums und die akute Immobilisierung von Daphnien bestimmt.

Das mit Gleichgewichtsperessigsäure behandelte Wasser bewirkte unverdünnt eine vollständige Hemmung des Algenwachstums von *Desmodesmus svbspicatus* mit einem EC₅₀-Wert von 46 % für die Hemmung der Wachstumsrate und von 25 % für die Hemmung der Ausbeute. Der in Beispiel 1 erhaltene Wasserstrom bewirkte dagegen unverdünnt nur eine statistisch nicht signifikante Hemmung der Wachstumsrate von 5 %. Der in Beispiel 2 erhaltene Wasserstrom bewirkte unverdünnt eine Hemmung der Wachstumsrate von 13 %.

Das mit Gleichgewichtsperessigsäure behandelte Wasser bewirkte unverdünnt eine vollständige Immobilisierung von *Daphnia magna* mit einem EC₅₀-Wert von 12 %. Die in den Beispielen 1 und 2 erhaltenen Wasserströme bewirkten dagegen auch unverdünnt keine Immobilisierung und zeigten keine erkennbare Auswirkung auf Daphnien.

Die Beispiele zeigen, dass sich mit der erfindungsgemäßen Vorrichtung und dem erfindungsgemäßen Verfahren in einem Wasserstoffperoxid und Peressigsäure enthaltenden Wasserstrom die Gehalte an Wasserstoffperoxid und Peressigsäure zuverlässig so verringern lassen, dass der Wasserstrom bei der Einleitung in Gewässer keine schädlichen Auswirkungen auf Wasserorganismen hat.

### Liste der Bezugszeichen:

(1) Wasserstrom
(2) Messvorrichtung zur Bestimmung der Flussrate
(3) Messvorrichtung zur Bestimmung der Konzentration an Wasserstoffperoxid
(4) Messvorrichtung zur Bestimmung der Konzentration an Peressigsäure
(5) Dosiervorrichtung zur Dosierung eines Reduktionsmittels
(6) Steuereinrichtung
(7) Messvorrichtung zur Bestimmung der Salinität
(8) Vorratsbehälter für flüssiges Reduktionsmittel
(9) Seitenstrom
(10) Ballastwassertanks

## Patentansprüche

1. Vorrichtung zur Verringerung des Gehalts an Wasserstoffperoxid und Peressigsäure in einem Wasserstrom (1), umfassend
eine erste Messvorrichtung (2) zur Bestimmung der Flussrate des Wasserstroms,
eine zweite Messvorrichtung (3) zur Bestimmung der Konzentration an Wasserstoffperoxid in dem Wasserstrom,
eine dritte Messvorrichtung (4) zur Bestimmung der Konzentration an Peressigsäure in dem Wasserstrom, eine zusätzliche Messvorrichtung (7) zur Bestimmung der Salinität in dem Wasserstrom,
eine Dosiervorrichtung (5) zur Dosierung eines Reduktionsmittels in den Wasserstrom stromabwärts von der zweiten und dritten Messvorrichtung und
eine Steuereinrichtung (6), die aus der Flussrate des Wasserstroms, der Konzentration an Wasserstoffperoxid in dem Wasserstrom, der Konzentration an Peressigsäure in dem Wasserstrom und der Salinität eine Menge an Reduktionsmittel zur Verringerung des Gehalts an Wasserstoffperoxid und Peressigsäure auf einen gewünschten Wert berechnet und die Dosiervorrichtung zur Dosierung des Reduktionsmittels ansteuert.

2. Vorrichtung nach Anspruch 1,
**dadurch gekennzeichnet,**
**dass** die Messvorrichtung zur Bestimmung der Konzentration an Wasserstoffperoxid in dem Wasserstrom einen amperometrischen Sensor umfasst.

3. Vorrichtung nach Anspruch 1 oder 2,
**dadurch gekennzeichnet,**
**dass** die Messvorrichtung zur Bestimmung der Konzentration an Peressigsäure in dem Wasserstrom einen amperometrischen Sensor umfasst.

4. Vorrichtung nach einem der Ansprüche 1 bis 3,
**dadurch gekennzeichnet,**
**dass** die Messvorrichtung zur Bestimmung der Salinität einen Leitfähigkeitssensor umfasst.

5. Vorrichtung nach einem der Ansprüche 1 bis 4,
**dadurch gekennzeichnet,**
**dass** die Dosiervorrichtung zur Dosierung eines Reduktionsmittels einen Vorratsbehälter (8) und eine regelbare Dosierpumpe (5) für flüssiges Reduktionsmittel umfasst.

6. Vorrichtung nach einem der Ansprüche 1 bis 5,
**dadurch gekennzeichnet,**
**dass** die zweite und dritte Messvorrichtung in einem Seitenstrom (9) des Wasserstroms angeordnet sind.

7. Verfahren zur Verringerung des Gehalts an Wasserstoffperoxid und Peressigsäure in einem Wasserstrom, umfassend eine Dosierung eines flüssigen Reduktionsmittels in den Wasserstrom mit einer Vorrichtung gemäß einem der Ansprüche 1 bis 6.

8. Verfahren nach Anspruch 7, **dadurch gekennzeichnet, dass** der Wasserstrom Ballastwassertanks (10) eines Schiffes entnommen wird.

9. Verfahren nach Anspruch 7 oder 8,
**dadurch gekennzeichnet,**
**dass** das flüssige Reduktionsmittel eine wässrige Lösung von Natriumsulfit ist.

## Claims

1. Device for reducing the content of hydrogen peroxide and peracetic acid in a water stream (1), comprising a first measuring device (2) for determining the flow rate of the water stream, a second measuring device (3) for determining the concentration of hydrogen peroxide in the water stream, a third measuring device (4) for determining the concentration of peracetic acid in the water stream, an additional measuring device (7) for determining the salinity in the water stream,
a metering device (5) for metering a reducing agent into the water stream downstream of the second and third measuring devices and a control device (6) which, from the flow rate of the water stream, the concentration of hydrogen peroxide in the water stream, the concentration of peracetic acid in the water stream and the salinity, calculates an amount of reducing agent for reducing the content of hydrogen peroxide and peracetic acid to a desired value and actuates the metering device for metering the reducing agent.

2. Device according to Claim 1, **characterized in that** the measuring device for determining the concentration of hydrogen peroxide in the water stream comprises an amperometric sensor.

3. Device according to Claim 1 or 2, **characterized in that**
the measuring device for determining the concentration of peracetic acid in the water stream comprises an amperometric sensor.

4. Device according to one of Claims 1 to 3, **characterized in that** the measuring device for determining the salinity comprises a conductivity sensor.

5. Device according to any one of Claims 1 to 4, **characterized in that** the metering device for metering a reducing agent comprises a storage vessel (8) and a controllable metering pump (5) for liquid reducing agent.

6. Device according to any one of Claims 1 to 5, **characterized in that** the second and third measuring devices are arranged in a side stream (9) of the water stream.

7. Method for reducing the content of hydrogen peroxide and peracetic acid in a water stream, comprising metering a liquid reducing agent into the water stream using a device according to any one of Claims 1 to 6.

8. Method according to Claim 7, **characterized in that** the water stream is withdrawn from ballast water tanks (10) of a ship.

9. Method according to Claim 7 or 8, **characterized in that** the liquid reducing agent is an aqueous solution of sodium sulphite.

## Revendications

1. Dispositif pour la réduction de la teneur en peroxyde d'hydrogène et en acide peracétique dans un courant d'eau (1), comprenant
un premier dispositif de mesure (2) pour la détermination de la vitesse d'écoulement du courant d'eau,
un deuxième dispositif de mesure (3) pour la détermination de la concentration en peroxyde d'hydrogène dans le courant d'eau,
un troisième dispositif de mesure (4) pour la détermination de la concentration en acide peracétique dans le courant d'eau,
un dispositif de mesure supplémentaire (7) pour la détermination de la salinité dans le courant d'eau,
un dispositif d'introduction (5) pour l'introduction d'un réducteur dans le courant d'eau en aval du deuxième et du troisième dispositif de mesure, et
un dispositif de commande (6), qui calcule à partir de la vitesse d'écoulement du courant d'eau, de la concentration en peroxyde d'hydrogène dans le courant d'eau, de la concentration en acide peracétique dans le courant d'eau et de la salinité une quantité de réducteur pour la réduction de la teneur en peroxyde d'hydrogène et en acide peracétique à une valeur souhaitée, et commande le dispositif d'introduction pour l'introduction du réducteur.

2. Dispositif selon la revendication 1, **caractérisé en ce que** le dispositif de mesure pour la détermination de la concentration en peroxyde d'hydrogène dans le courant d'eau comprend un capteur ampérométrique.

3. Dispositif selon la revendication 1 ou 2, **caractérisé en ce que** le dispositif de mesure pour la détermination de la concentration en acide peracétique dans le courant d'eau comprend un capteur ampérométrique.

4. Dispositif selon l'une quelconque des revendications 1 à 3, **caractérisé en ce que** le dispositif de mesure pour la détermination de la salinité comprend un capteur de conductivité.

5. Dispositif selon l'une quelconque des revendications 1 à 4, **caractérisé en ce que** le dispositif d'introduction pour l'introduction d'un réducteur comprend un contenant de stockage (8) et une pompe d'introduction réglable (5) pour le réducteur liquide.

6. Dispositif selon l'une quelconque des revendications 1 à 5, **caractérisé en ce que** le deuxième et le troisième dispositif de mesure sont agencés dans un courant latéral (9) du courant d'eau.

7. Procédé de réduction de la teneur en peroxyde d'hydrogène et en acide peracétique dans un courant d'eau, comprenant une introduction d'un réducteur liquide dans le courant d'eau avec un dispositif selon l'une quelconque des revendications 1 à 6.

8. Procédé selon la revendication 7, **caractérisé en ce que** le courant d'eau est extrait du réservoir d'eau de ballast (10) d'un navire.

9. Procédé selon la revendication 7 ou 8, **caractérisé en ce que** le réducteur liquide est une solution aqueuse de sulfite de sodium.
